(19) ...

(19) Europäisches Patentamt
European Patent Office
Office européen des brevets

(11) **EP 4 286 457 A1**

(12) **EUROPEAN PATENT APPLICATION**
published in accordance with Art. 153(4) EPC

(43) Date of publication:
06.12.2023 Bulletin 2023/49

(21) Application number: 22856032.2

(22) Date of filing: 13.07.2022

(51) International Patent Classification (IPC):
$C08J\ 5/04$ [(2006.01)]  $C08J\ 5/06$ [(2006.01)]
$C08L\ 101/00$ [(2006.01)]  $C08L\ 21/00$ [(2006.01)]
$C08L\ 23/08$ [(2006.01)]  $C08L\ 23/16$ [(2006.01)]
$C08L\ 9/02$ [(2006.01)]  $C08L\ 9/06$ [(2006.01)]
$C08L\ 1/02$ [(2006.01)]  $C08K\ 3/013$ [(2018.01)]

(52) Cooperative Patent Classification (CPC):
C08J 5/04; C08J 5/06; C08K 3/013; C08L 1/02;
C08L 9/02; C08L 9/06; C08L 21/00; C08L 23/08;
C08L 23/16; C08L 101/00

(86) International application number:
PCT/KR2022/010241

(87) International publication number:
WO 2023/018031 (16.02.2023 Gazette 2023/07)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.08.2021 KR 20210107618
24.06.2022 KR 20220077703

(71) Applicant: LG Chem, Ltd.
Yeoui-daero, Youngdungpo-gu
Seoul 07336 (KR)

(72) Inventors:
• PARK, Chee Sung
Daejeon 34122 (KR)
• HWANG, Daehyeon
Daejeon 34122 (KR)
• PARK, Minsung
Daejeon 34122 (KR)
• JEON, Kwang Seoung
Daejeon 34122 (KR)

(74) Representative: Goddar, Heinz J.
Boehmert & Boehmert
Anwaltspartnerschaft mbB
Pettenkoferstrasse 22
80336 München (DE)

(54) **POLYMER COMPOSITE AND MOLDED PRODUCT COMPRISING SAME**

(57) The present disclosure relates to a polymer composite and a molded article containing the same. According to the present disclosure, there is provided a polymer composite capable of exhibiting excellent mechanical properties and high lightness while being environmentally friendly by containing cellulose fibers as a reinforcing material.

EP 4 286 457 A1

【FIG. 2】

(a)

(b)

**Description**

*[TECHNICAL FIELD]*

Cross-reference to Related Application (s)

This application claims the benefits of Korean Patent Applications No. 10-2021-0107618 filed on August 13, 2021 and No. 10-2022-0077703 filed on June 24, 2022 with the Korean Intellectual Property Office, the disclosure of which is incorporated herein by reference in its entirety.

The present disclosure relates to a polymer composite including a reinforcing material containing cellulose fibers, and a molded article containing the same.

*[BACKGROUND OF ART]*

Pulp refers to a lignocellulosic fibrous material obtained by chemically or mechanically separating cellulose fibers from wood, fiber crops, waste paper, rags, or the like. Cellulose fibers are mainly used in the paper industry, and are used as raw materials for nanocellulose.

Nanocellulose is being applied to research to improve physical properties of polymers by complexation with polymers. It is easy to recycle the polymer composite to which environmentally friendly nanocellulose is applied as a reinforcing material, unlike a polymer composite to which glass fiber is applied.

However, the process for producing nanocellulose from the cellulose fibers is complicated and costly. In addition, there is a problem in that the cellulose fibers are deteriorated due to a high temperature in the process of complexation with polymers. Further, since the cellulose fibers and nanocellulose are easily aggregated in the polymer composite, it is very difficult to disperse them in the nanoscale, and thus there is a limitation in obtaining a sufficient reinforcing effect.

*[DETAILED DESCRIPTION OF THE INVENTION]*

*[Technical Problem]*

In the present disclosure, there is provided a polymer composite capable of exhibiting excellent mechanical properties and high lightness while being environmentally friendly by containing cellulose fibers as a reinforcing material.

In addition, there is provided a molded article containing the polymer composite.

*[Technical Solution]*

Hereinafter, the polymer composite and the molded article including the same according to embodiments of the present invention will be described.

The terms are used merely to refer to specific embodiments, and are not intended to restrict the present disclosure unless it is explicitly expressed.

Singular expressions of the present disclosure may include plural expressions unless they are differently expressed contextually.

The terms "include", "comprise", and the like of the present disclosure are used to specify certain features, regions, integers, steps, operations, elements, and/or components, and these do not exclude the existence or the addition of other certain features, regions, integers, steps, operations, elements, and/or components.

As used herein, 'nanofiber' or 'nanofibril' refers to a fiber having a diameter in the nanometer range, and 'microfiber' refers to a fiber having a diameter in the micrometer range. For example, the microfiber may be composed of a bundle of the nanofibers. In the present disclosure, the 'diameter' of various fibers and fibrils refers to a diameter having the longest length in their cross section.

As used herein, 'pulp' refers to a lignocellulosic fibrous material obtained by chemically or mechanically separating cellulose fibers from wood, fiber crops, waste paper, rags, or the like.

As used herein, 'pulp fiber', 'cellulose fiber' or 'microcellulose fiber' refers to a microfiber made of cellulose. As used herein, 'cellulose nanofiber' or 'nanocellulose fiber' refers to a nanofiber made of cellulose.

As used herein, 'fibrillation' refers to a phenomenon in which nanofibrils forming the internal structure of microcellulose fibers are released and raised like fluff on the microcellulose fibers.

As used herein, 'fibrillated cellulose fiber' refers to a microcellulose fiber in a state in which nanofibrils having a diameter in the nanometer range are raised like fluff on the microcellulose fiber by the fibrillation.

According to an embodiment of the present disclosure, there is provided a polymer composite containing

a polymer matrix,
a reinforcing material comprising cellulosic fibers, and first inorganic particles; and
satisfying the following Equation 1:

[Equation 1]

$$L^* \geq 75.0$$

in Equation 1, the L* value is the lightness in the L*a*b* (CIE LAB) colorimetric system measured using a spectrophotometer for a specimen prepared from the polymer composite.

As a result of continuous research by the present inventors, it was confirmed that a polymer composite obtained by dispersing a reinforcing material containing cellulose fibers and a color concealing material, which is inorganic particles, in a polymer matrix can exhibit excellent mechanical properties and high lightness while being environmentally friendly.

The polymer composite according to an embodiment of the present disclosure contains a reinforcing material including the cellulose fibers dispersed in the polymer matrix, and the first inorganic particles.

The polymer matrix may be a polymer resin.

For example, the polymer matrix may include at least one polymer selected from the group consisting of polyolefin, polyamide, styrenic polymer, and polycarbonate.

Specifically, the polymer matrix may be polyolefins such as polyethylene, polyethylene-based copolymer, polypropylene, and polypropylene-based copolymer; aliphatic polyamides such as nylon-6 and nylon-66; aromatic polyamides such as aramid; styrenic polymers such as polystyrene, acrylonitrile-butadiene-styrene copolymer, styrene-maleic anhydride copolymer, styrene-acrylonitrile copolymer, and styrene-butadiene-styrene copolymer; and polycarbonates obtained by polymerizing a polyol including bisphenol A, polyether polyol, polyester polyol, or a mixture thereof and phosgene.

Preferably, the polymer matrix may include at least one polymer resin selected from the group consisting of polyethylene, polyethylene-based copolymer, polypropylene, polypropylene-based copolymer, nylon-6, nylon-66, aramid, polystyrene, acrylonitrile-butadiene-styrene copolymer, styrene-maleic anhydride copolymer, styrene-acrylonitrile copolymer, and styrene-butadiene-styrene copolymer, and polycarbonate.

According to an embodiment of the present disclosure, the polymer composite contains the first inorganic particles dispersed in the polymer matrix.

The first inorganic particles may be added as a color concealing material for improved color without degrading mechanical properties of the polymer composite. For example, the polymer composite including cellulose fibers generally has a pale yellow or dark yellow color. When applying the first inorganic particles, the whiteness of the polymer composite can be improved.

The first inorganic particles may be inorganic particles having a high refractive index. Preferably, the first inorganic particles may include one or more inorganic particles selected from the group consisting of titanium oxide, zinc oxide, boron nitride, and barium sulfate.

The first inorganic particles may be inorganic particles having an average particle diameter of 50 nm to 1000 nm, 100 nm to 1000 nm, or 100 nm to 500 nm. In order to efficiently include the first inorganic particles in the polymer composite, the first inorganic particles preferably have an average particle diameter of 50 nm or more or 100 nm or more. However, excessively large inorganic particles may act as defects in the polymer composite to deteriorate mechanical properties. Therefore, it is preferable that the first inorganic particles have an average particle diameter of 1000 nm or less or 500 nm or less.

According to an embodiment of the present disclosure, the polymer composite contains the reinforcing material dispersed on the polymer matrix.

The reinforcing material contains cellulose fibers.

The cellulose fibers may be natural cellulose fibers obtained from wood such as softwoods or hardwoods. For example, the cellulose fibers may be pulp fibers obtained by dissolving components other than cellulose from natural raw materials such as softwoods or hardwoods using caustic soda or sodium sulfate.

Preferably, the cellulose fibers may be microcellulose fibers including nanofibrils and second inorganic particles.

Cellulose nanofibers, which are biodegradable and environmentally friendly natural polymer materials, have recently been attracting attention as a reinforcing material for plastics. However, the process of obtaining nanofibers by nanosizing (miniaturizing) microcellulose fibers is complicated and costly, resulting in a problem of increasing the price of a polymer composite including cellulose nanofibers as a reinforcing material.

According to the present disclosure, when the microcellulose fibers are fibrillated by growing second inorganic particles on the microcellulose fibers without nanosizing the cellulose fibers, and then complexed with a polymer matrix, excellent mechanical properties equivalent to those to which cellulose nanofibers are applied can be achieved.

The microcellulose fibers may be natural cellulose fibers obtained from wood such as softwoods or hardwoods.

In general, fibrillation of microcellulose fibers means a phenomenon in which relatively large fibrils forming a membrane of cellulose fibers and their internal tissues are released through a process such as beating, and fine fibrils are formed on the surface like fluff.

In the present disclosure, the microcellulose fibers are fibrillated cellulose fibers by growing second inorganic particles on the cellulose fibers. That is, the microcellulose fibers including nanofibrils and second inorganic particles may be fibers in which some of the fibrils forming the microcellulose fibers are released or defibrated by the growth of the second inorganic particles on the microcellulose fibers.

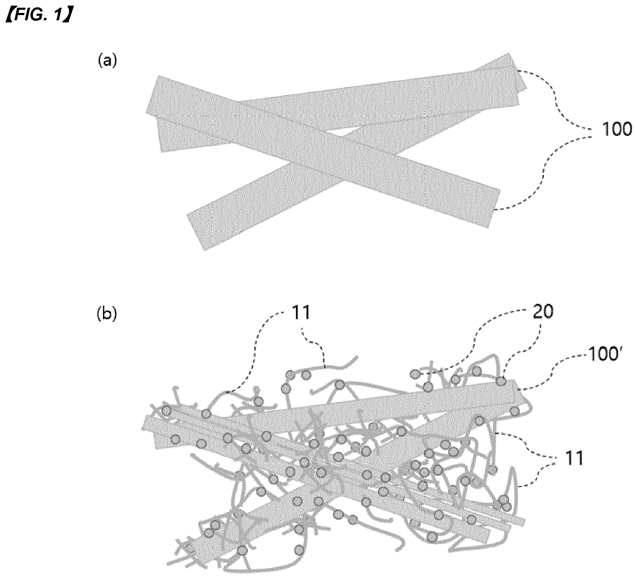

FIG. 1 is an enlarged schematic view of (a) non-fibrillated microcellulose fibers and (b) microcellulose fibers including nanofibrils and inorganic particles.

In FIG. 1 (a), the non-fibrillated microcellulose fiber 100 is a fiber having a diameter in the micrometer range. Referring to FIG. 1 (b), when inorganic particles are grown on the cellulose fibers, some of the fibrils forming the microcellulose fibers 100' are released by the growth of the inorganic particles 20, thereby forming a fiber in which nanofibrils 11 are raised on the microcellulose fibers 100' like fluff. Also, the nanofibrils 11 may be present inside the microcellulose fibers 100' through fibrillation by the growth of the inorganic particles 20.

For example, the microcellulose fibers include nanofibrils and second inorganic particles. Herein, the nanofibrils may be bonded to a surface of the second microcellulose fibers, or may be present inside the microcellulose fibers. In addition, the inorganic particles may be bonded to the nanofibrils or bonded to a surface or inside of the microcellulose fibers.

In the microcellulose fibers including nanofibrils and second inorganic particles, the microcellulose fibers may have a diameter of 1 $\mu$m or more; and 30 $\mu$m or less, 25 $\mu$m or less, 20 $\mu$m or less, 15 $\mu$m or less, or 10 $\mu$m or less. Specifically, the microcellulose fibers may have a diameter of 1 $\mu$m to 30 $\mu$m, 1 $\mu$m to 25 $\mu$m, 1 $\mu$m to 20 $\mu$m, 1 $\mu$m to 15 $\mu$m, or 1 $\mu$m to 10 $\mu$m.

And, in the microcellulose fibers including nanofibrils and second inorganic particles, the nanofibrils may have a diameter of 10 nm or more, 20 nm or more, 30 nm or more, 40 nm or more, or 50 nm or more; and 400 nm or less, 350 nm or less, 300 nm or less, 250 nm or less, 200 nm or less, 150 nm or less, or 100 nm or less. Specifically, the nanofibrils may have a diameter of 10 nm to 400 nm, 10 nm to 350 nm, 10 nm to 300 nm, 20 nm to 300 nm, 20 nm to 250 nm, 30 nm to 250 nm, 30 nm to 200 nm, 40 nm to 200 nm, 40 nm to 150 nm, 50 nm to 150 nm, or 50 nm to 100 nm.

The lengths of the second microcellulose fibers and the nanofibrils are not particularly limited.

The microcellulose fibers including nanofibrils and second inorganic particles may be prepared by adding a reducing agent, a catalyst, a ligand, or a mixture thereof to a mixture containing microcellulose fibers, a second inorganic particle precursor, and a solvent to grow second inorganic particles from the second inorganic particle precursor distributed on the cellulose fibers.

For example, in the above process, a mixture containing microcellulose fibers, a second inorganic particle precursor and a solvent is prepared.

An appropriate solvent capable of dissolving the second inorganic particle precursor and swelling the microcellulose fibers may be used as the solvent. For example, water, alcohol (e.g., lower alcohol such as methanol, ethanol, propanol or butanol), dimethyl sulfoxide, sodium hydroxide solution, ammonia solution, urea solution, or a mixture thereof may be used.

The solvent may be used in an amount of 1000 parts by weight to 10000 parts by weight based on 100 parts by weight of the microcellulose fibers. Within this range, the microcellulose fibers are sufficiently swollen, and fluidity of the second inorganic particle precursor is ensured, so that the second inorganic particle precursor can be uniformly dispersed on the microcellulose fibers.

It is possible to provide polymer composites having various physical properties depending on the type of second inorganic particles grown on the microcellulose fibers. That is, the second inorganic particle precursor may be appropriately selected according to physical properties to be imparted to the polymer composite. For example, for the purpose of imparting antibacterial property and heat resistance to the polymer composite, a second inorganic particle precursor capable of growing zinc oxide may be selected.

For example, the second inorganic particles may include at least one element selected from the group consisting of copper, zinc, calcium, aluminum, iron, platinum, palladium, ruthenium, iridium, rhodium, osmium, chromium, cobalt, nickel, manganese, vanadium, molybdenum, and gallium. The components of the inorganic particles may be one type or two or more types. For example, the second inorganic particles may be the above-described metal particles or oxides, nitrides, or sulfides thereof.

The second inorganic particle precursor may be a salt of at least one element selected from the group consisting of copper, zinc, calcium, aluminum, iron, platinum, palladium, ruthenium, iridium, rhodium, osmium, chromium, cobalt, nickel, manganese, vanadium, molybdenum, and gallium. The salt may be an acetate, chloride, or nitrate. In addition, a silicon oxide precursor such as tetraethyl orthosilicate (TEOS) may be used as the second inorganic particle precursor.

The second inorganic particles may be contained in an amount of 10 to 40 parts by weight based on 100 parts by weight of the microcellulose fibers. Specifically, the second inorganic particles may be contained in an amount of 10 parts by weight or more, or 15 parts by weight or more, and 40 parts by weight or less, 35 parts by weight or less, or 30 parts by weight or less based on 100 parts by weight of the microcellulose fibers. Preferably, the second inorganic particles may be contained in an amount of 10 to 40 parts by weight, 10 to 35 parts by weight, 15 to 35 parts by weight, or 15 to 30 parts by weight based on 100 parts by weight of the microcellulose fibers. Accordingly, the content of the second inorganic particle precursor contained in the mixture may be controlled such that the content of second inorganic particles finally prepared on the microcellulose fibers meets the above range. Within this range, sufficient fibrillation can be induced by uniformly distributing the second inorganic particle precursor to the microcellulose fibers, thereby enabling the expression of improved mechanical properties.

The mixture may be prepared by dissolving the second inorganic particle precursor in the solvent, and then adding microcellulose fibers thereto. The mixture is stirred to swell the microcellulose fibers, and at the same time, the second inorganic particle precursor is evenly distributed on the swollen microcellulose fibers. The second inorganic particle precursor may be attached to the microcellulose fibers by hydrogen bonding or ionic bonding.

Herein, the type and content of the reducing agent, catalyst, and ligand contained in the mixture may be appropriately selected according to the added second inorganic particle precursor, and the type and content of the second inorganic particles to be grown. For example, the reducing agent may be sodium hydroxide (NaOH), a metal hydride-based reducing agent, a borohydride-based reducing agent, a borane-based reducing agent, a silane-based reducing agent, a hydrazine-based reducing agent, or a hydrazide-based reducing agent. As the catalyst, ammonia or urea may be used. As the ligand, benzene-1 ,3,5-tricarboxylate may be used.

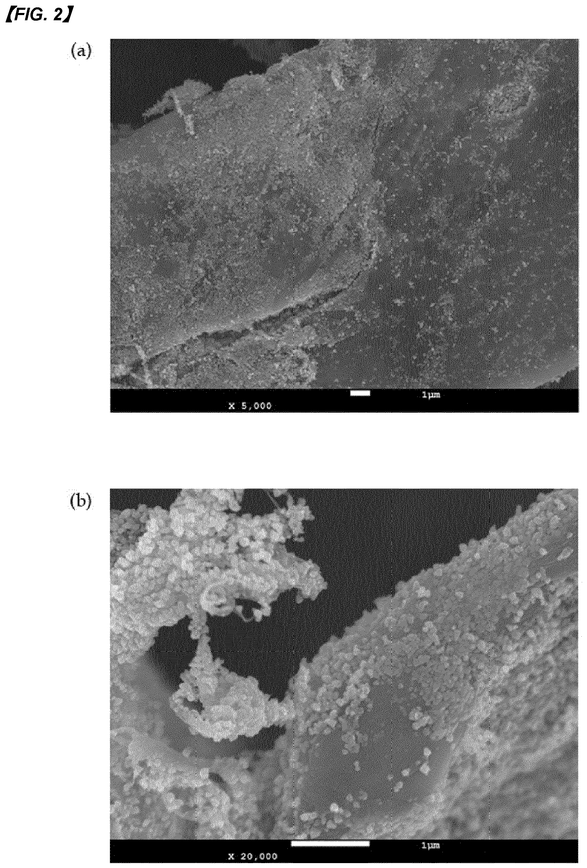

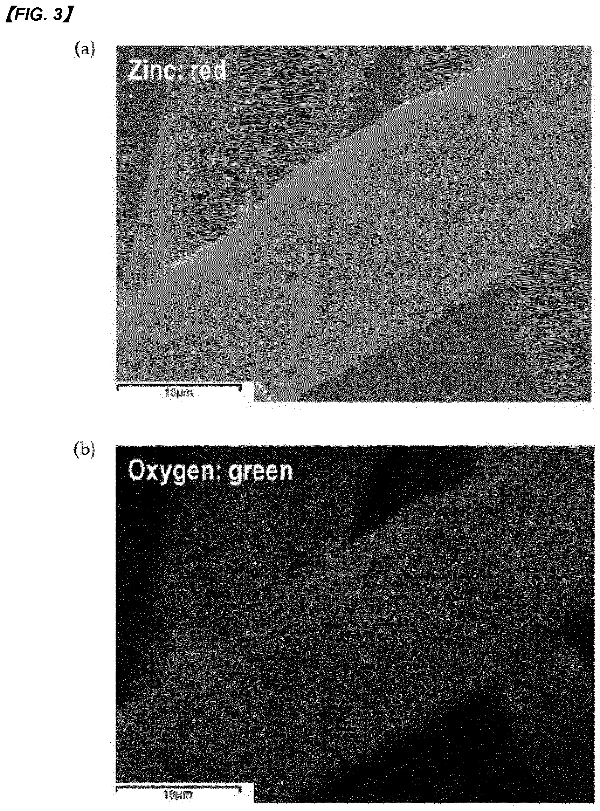

FIG. 2 and FIG. 3 are scanning electron microscope (SEM) images of microcellulose fibers fibrillated by the growth of the second inorganic particles according to one example of the present disclosure.

Referring to FIG. 2 (a), it can be confirmed that fibrillation occurred by the growth of second inorganic particles on the microcellulose fibers. FIG. 2 (b) is an enlarged view of a part of (a).

Referring to FIG. 3, it can be confirmed that (a) metal elements (zinc) and (b) oxygen are evenly distributed on the microcellulose fibers by the growth of the second inorganic particles.

Through the above process, the microcellulose fibers containing nanofibrils and second inorganic particles may be obtained.

According to an embodiment of the present disclosure, the second inorganic particles included in the microcellulose fibers may have a diameter of 0.01 $\mu$m or more, 0.03 $\mu$m or more, or 0.05 $\mu$m or more; and 10 $\mu$m or less, 7 $\mu$m or less, or 5 $\mu$m or less. Preferably, the second inorganic particles may have a diameter of 0.01 $\mu$m to 10 $\mu$m, 0.03 $\mu$m to 7 $\mu$m, or 0.05 $\mu$m to 5 $\mu$m.

When the diameter of the second inorganic particles included in the microcellulose fibers is too large, the second inorganic particles may act as defects, thereby reducing mechanical properties of the polymer composite. Thus, the diameter of the second inorganic particles is preferably 10 $\mu$m or less, 7 $\mu$m or less, or 5 $\mu$m or less.

In addition, in order to allow the fibrillation of microcellulose fibers by the growth of second inorganic particles to proceed sufficiently, the diameter of the second inorganic particles is preferably 0.01 $\mu$m or more, 0.03 $\mu$m or more, or 0.05 $\mu$m or more.

The second inorganic particles may be spherical particles having a diameter of 0.01 $\mu$m to 10 $\mu$m. In addition, the second inorganic particles may be columnar particles having a diameter of 0.01 $\mu$m to 10 $\mu$m on one axis and a diameter of 0.02 $\mu$m to 30 $\mu$m on another axis. The diameter of the second inorganic particles may be measured using a scanning electron microscope. As a non-limiting example, the diameters, minor axis diameters, or major axis diameters of 20 second inorganic particles are measured using a scanning electron microscope, respectively, and then an average value calculated by excluding the maximum and minimum values thereof is obtained.

According to an embodiment of the present disclosure, the second inorganic particles may be included in an amount of 10 parts by weight or more, or 15 parts by weight or more; and 40 parts by weight or less, 35 parts by weight or less, or 30 parts by weight or less based on 100 parts by weight of the microcellulose fibers. Preferably, the second inorganic particles may be included in an amount of 10 to 40 parts by weight, 10 to 35 parts by weight, 15 to 35 parts by weight or 15 to 30 parts by weight based on 100 parts by weight of the microcellulose fibers.

In order to sufficiently express the fibrillation effect of the microcellulose fibers by the growth of second inorganic particles and mechanical properties, the second inorganic particles are preferably included in an amount of 10 parts by weight or more, or 15 parts by weight or more based on 100 parts by weight of the microcellulose fibers.

However, when the second inorganic particles are included in an excessive amount on the microcellulose fibers, compatibility with the polymer matrix may be reduced, and thus mechanical properties of the polymer composite may be deteriorated. Therefore, the second inorganic particles are preferably included in an amount of 40 parts by weight or less, 35 parts by weight or less, or 30 parts by weight or less based on 100 parts by weight of the microcellulose fibers.

For excellent mechanical properties, the first inorganic particles and the second inorganic particles are preferably contained in a total amount of 1 part by weight or more based on 100 parts by weight of the polymer composite. However, an excessive amount of the inorganic particles may impair compatibility with the polymer matrix, thereby reducing mechanical properties of the polymer composite. Therefore, it is preferable that the first inorganic particles and the second inorganic particles are contained in the polymer composite in a total amount of 30 parts by weight or less based on 100 parts by weight of the polymer composite.

For example, the first inorganic particles and the second inorganic particles may be contained in a total amount of 1 part by weight or more, 2.5 parts by weight or more, or 5 parts by weight or more; and 30 parts by weight or less, 25 parts by weight or less, 20 parts by weight or less, or 15 parts by weight or less based on 100 parts by weight of the polymer composite. Specifically, the first inorganic particles and the second inorganic particles may preferably be contained in a total amount of 1 to 30 parts by weight, 2.5 to 30 parts by weight, 2.5 to 25 parts by weight, 5 to 25 parts by weight, 5 to 20 parts by weight, or 5 to 15 parts by weight.

According to an embodiment of the present disclosure, the cellulose fibers may be a mixture of first microcellulose fibers; and second microcellulose fibers containing nanofibrils and second inorganic particles.

The first microcellulose fibers may be natural cellulose fibers obtained from wood such as softwoods or hardwoods. For example, the first microcellulose fibers may be obtained by dissolving components other than cellulose from natural raw materials such as softwoods or hardwoods using caustic soda or sodium sulfate.

The first microcellulose fibers refer to microcellulose fibers in a non-fibrillated state, unlike the above-described microcellulose fibers including nanofibrils and second inorganic particles (i.e., fibrillated microcellulose fibers).

The first microcellulose fibers may have a diameter of 10 $\mu$m to 40 $\mu$m and a length of 0.1 mm to 3 mm. Specifically, the first microcellulose fibers may have a diameter of 10 $\mu$m to 40 $\mu$m, 15 $\mu$m to 40 $\mu$m, 15 $\mu$m to 35 $\mu$m, or 15 $\mu$m to 30 $\mu$m; and a length of 0.1 mm to 3 mm, 0.1 mm to 2.5 mm, 0.2 mm to 2.5 mm, or 0.2 mm to 2 mm.

The first microcellulose fibers may be obtained by a wet method or a dry method. As a non-limiting example, the first microcellulose fibers may be obtained by adding a cellulose raw material to distilled water, and then grinding it in a mixer in a wet state several times, followed by filtration under reduced pressure.

The second microcellulose fibers including nanofibrils and second inorganic particles may be fibers in which some of the fibrils forming the second microcellulose fibers are released or defibrated by the growth of the second inorganic particles on the microcellulose fibers. For details on the nanofibrils, the second inorganic particles, and the microcellulose fibers including them, refer to the above.

According to an embodiment of the present disclosure, the first microcellulose fibers and the second microcellulose fibers including nanofibrils and second inorganic particles may be contained in the polymer composite in a weight ratio of 1:0.1 to 1:3.

That is, in order to improve mechanical properties while lowering the manufacturing cost of the polymer composite, the second microcellulose fibers may be included in the polymer composite in a weight ratio of 0.1 times or more, or 0.2 times or more based on the first microcellulose fibers.

However, when the content of the second microcellulose fibers is excessively increased compared to the first microcellulose fibers, the total amount of inorganic particles included in the polymer composite is relatively increased, and thus the mechanical properties of the polymer composite may be reduced. Therefore, the second microcellulose fibers may preferably be included in the polymer composite in a weight ratio of 3 times or less, 2.5 times or less, 2 times or less, 1.5 times or less, 1.2 times or less, or 1 times or less based on the first microcellulose fibers.

Preferably, the first microcellulose fibers and the second microcellulose fibers are included in the polymer composite in a weight ratio of 1:0.1 to 1:3, 1:0.1 to 1:2.5, 1:0.1 to 1:2, 1:0.1 to 1:1.5, 1:0.2 to 1:1.5, 1:0.2 to 1:1.2, or 1:0.2 to 1:1.

According to an embodiment of the present disclosure, the polymer composite may contain 30 to 90 wt% of the polymer matrix, 5 to 60 wt% of the reinforcing material containing cellulose fibers; and 0.1 to 15 wt% of the first inorganic particles.

According to another embodiment of the present disclosure, the polymer composite may contain 35 to 85 wt% of the polymer matrix, 10 to 55 wt% of the reinforcing material containing cellulose fibers; and 1 to 15 wt% of the first inorganic particles.

According to another embodiment of the present disclosure, the polymer composite may contain 35 to 80 wt% of the polymer matrix, 10 to 50 wt% of the reinforcing material containing cellulose fibers; and 2.5 to 10 wt% of the first inorganic particles.

In order to provide a polymer composite containing an appropriate amount of the matrix, the polymer matrix is preferably contained in the polymer composite in an amount of 30 wt% or more, or 35 wt% or more. In addition, for the expression of improved mechanical properties according to the present disclosure, the polymer matrix is preferably contained in the polymer composite in an amount of 90 wt% or less, 85 wt% or less, or 80 wt% or less. Specifically, the polymer matrix may be included in the polymer composite in an amount of 30 to 90 wt%, 30 to 85 wt%, 35 to 85 wt%, or 35 to 80 wt%.

For improved mechanical properties, the reinforcing material containing cellulose fibers is preferably contained in the polymer composite in an amount of 5 wt% or more, or 10 wt% or more. However, an excessive amount of the reinforcing material may impair compatibility with the polymer matrix, thereby reducing mechanical properties of the polymer composite. Therefore, it is preferable that the reinforcing material containing cellulose fibers is contained in the polymer composite in an amount of 60 wt% or less, 55 wt% or less, or 50 wt% or less. Specifically, the reinforcing material may be contained in an amount of 5 to 60 wt%, 5 to 55 wt%, 10 to 55 wt%, or 10 to 50 wt%.

For improved mechanical properties and improved color expression according to the present disclosure, the first inorganic particles are preferably contained in the polymer composite in an amount of 0.1 wt% or more, 1 wt% or more, or 2.5 wt% or more. However, an excessive amount of the inorganic particles may impair compatibility with the polymer matrix, thereby reducing mechanical properties of the polymer composite. Therefore, it is preferable that the first inorganic particles are contained in the polymer composite in an amount of 15 wt% or less, 12.5 wt% or less, or 10 wt% or less. Specifically, the first inorganic particles may be contained in the polymer composite in an amount of 0.1 to 15 wt%, 1 to 15 wt%, 1 to 12.5 wt%, 2.5 to 12.5 wt%, or 2.5 to 10 wt%.

Meanwhile, the polymer composite may further include a compatibilizer dispersed on the polymer matrix. The compatibilizer is a component that helps the polymer matrix, the reinforcing material, and the color concealing material to be well blended with each other.

As the compatibilizer, those known in the art to which the present invention pertains may be used in consideration of the specific type of the polymer matrix.

Preferably, the compatibilizer may be a modified polyolefin. The modified polyolefin refers to a resin obtained by modifying a polyolefin with an unsaturated carboxylic acid or a derivative thereof.

The polyolefin forming the modified polyolefin may be a chain-type olefin such as ethylene, propylene, butene, pentene, hexene, and heptene; a cyclic olefin such as cyclopentene, cyclohexene, and 1,3-cyclopentadiene; an olefin substituted with an aromatic ring such as styrene, or the like.

The unsaturated carboxylic acid forming the modified polyolefin may include fumaric acid, maleic acid, itaconic acid, citraconic acid, aconitic acid, and anhydrides thereof.

As a non-limiting example, the modified polyolefin may be polypropylene or polyethylene in which 0.1 to 10 wt% thereof is grafted with maleic anhydride.

The modified polyolefin may further improve compatibility of the cellulose fibers with respect to the polymer matrix, thereby further improving mechanical properties of the polymer composite.

**In** order to allow proper compatibility to be expressed, the compatibilizer may be contained in the polymer composite in an amount of 0.1 wt% or more, 1 wt% or more, or 5 wt% or more. However, an excessive amount of the compatibilizer may deteriorate mechanical properties of the polymer composite. Therefore, the compatibilizer is preferably contained in the polymer composite in an amount of 15 wt% or less, or 10 wt% or less. Specifically, the compatibilizer is contained in the polymer composite in an amount of 0.1 to 15 wt%, 1 to 15 wt%, 1 to 10 wt%, or 5 to 10 wt%.

According to an embodiment of the present disclosure, the polymer composite may be obtained by mixing the above-mentioned components in a mixer, followed by curing. In addition, the polymer composite may be prepared by preparing a composition in which the reinforcing material containing cellulose fibers and the first inorganic particles are mixed, and mixing the composition with the polymer matrix. As a non-limiting example, the polymer composite can be obtained by mixing the above-mentioned components in a batch mixer at 100 to 180 °C, preparing a master batch in the form of pellets, and injecting the master batch into an extruder for extrusion and injection.

According to an embodiment of the present disclosure, the polymer composite may exhibit improved mechanical properties and high lightness while being environmentally friendly by containing the above-described components.

As an example, the polymer composite may satisfy the following Equation 1:

$$[\text{Equation 1}]$$

$$L^* \geq 75.0$$

In Equation 1, the $L^*$ value is the lightness in the $L^*a^*b^*$ (CIE LAB) colorimetric system measured using a spectrophotometer for a specimen prepared from the polymer composite.

The $L^*a^*b^*$ (CIE LAB) colorimetric system is one of the methods for representing color tones for color evaluation, and represents a color that can be seen by the eye as a color space established by the International Commission on Illumination (CIE). This lightness ($L^*$ value) is an index indicating the tendency of lightness, and ranges from 0 to 100.

Preferably, the polymer composite may have a high $L^*$ value of 75.0 or more, 80.0 or more, 85.0 or more, or 90.0 or more. Specifically, the polymer composite may have the $L^*$ value of 75.0 to 99.5, 75.0 to 99.0, 80.0 to 98.5, 80.0 to 98.0, 85.0 to 98.0, 90.0 to 98.0, 90.0 to 97.5, 90.1 to 97.5, or 90.1 to 97.0. The $L^*$ value may be a value measured in a reflection mode for a specimen having an appropriate size using a spectrophotometer.

As another example, the polymer composite may have Izod impact strength measured according to ASTM D256 (23 °C, hammer head 3.00 J) for a specimen having a size of 63.5 mm x 12.7 mm x 3.2 mm with an ASTM D256 standard notch prepared from the polymer composite of 15 J/m or more. Specifically, the polymer composite may have the Izod impact strength of 15 J/m or more, 17 J/m or more, or 19 J/m or more; and 70 J/m or less, 65 J/m or less, 60 J/m or less, or 55 J/m or less. Preferably, the polymer composite may have the Izod impact strength of 15 J/m to 70 J/m, 15 J/m to 65 J/m, 17 J/m to 65 J/m, 19 J/m to 65 J/m, 19 J/m to 60 J/m, or 19 J/m to 55 J/m.

As another example, the polymer composite may have tensile strength of 25 MPa or more, when measured according to ASTM D638-5 for a dog-bone-shaped specimen (or a dumbbell-shaped specimen) prepared from the polymer composite according to ASTM D638-5. Preferably, the polymer composite may have tensile strength of 25 to 70 MPa, 25 to 65 MPa, 28 to 63 MPa, or 30 MPa to 63 MPa.

ASTM D638 provides a standard test method for determining the tensile properties of plastics. The tensile properties of the polymer composite are measured according to specimen Type V of ASTM D638. ASTM D638 is performed by applying a tensile force to the specimen and measuring the tensile properties of the specimen under stress. This may be performed at a constant tensile rate in the range of 1 to 500 mm/min until the specimen is broken (yield or fractured) using a conventional tensile testing machine. The tensile strength is the amount of force that can be applied until the specimen yields or breaks.

As another example, the polymer composite may have flexural strength measured according to ISO 178 for a specimen having a size of 80 mm x 10 mm x 4 mm prepared from the polymer composite of 50 MPa or more. Preferably, the polymer composite may have the flexural strength of 50 MPa to 95 MPa, 50 MPa to 90 MPa, 52 MPa to 90 MPa, or 52 MPa to 88 MPa.

In addition, the polymer composite may have flexural modulus measured according to ISO 178 for a specimen having a size of 80 mm x 10 mm x 4 mm prepared from the polymer composite of 1.5 GPa or more. Preferably, the polymer composite may have the flexural modulus of 1.5 GPa to 4.0 GPa, 1.6 GPa to 4.0 GPa, 1.6 GPa to 3.8 GPa, 1.7 GPa to 3.8 GPa, or 1.7 GPa to 3.6 GPa.

ISO 178 provides a standard test method for determining flexural properties of plastics by performing a three-point bend test. The three-point bend test applies force at the midpoint of a rectangular specimen. The applied force is measured by a load cell, and the resulting deflection is measured by either crosshead displacement or by a direct strain measurement device. This may be performed by applying the force to the specimen at a constant speed in the range of 1 to 500 mm/min using a conventional flexural testing machine. The flexural strength is the maximum flexural stress obtained during the flexural test. The flexural stress is a function of applied load, span, specimen width, and specimen thickness, and measured using a flexural tester.

As another example, the polymer composite may have the Izod impact strength of 15 J/m to 70 J/m, the tensile strength of 25 MPa to 70 MPa, and the flexural strength of 50 MPa to 95 MPa.

As another example, the polymer composite may have the Izod impact strength of 17 J/m to 65 J/m, the tensile strength of 28 MPa to 63 MPa, and the flexural strength of 52 MPa to 90 MPa.

As another example, the polymer composite may have the Izod impact strength of 19 J/m to 55 J/m, the tensile strength of 30 MPa to 63 MPa, and the flexural strength of 52 MPa to 88 MPa.

As another example, the polymer composite may have the Izod impact strength of 27 J/m to 55 J/m, the tensile strength of 50 MPa to 63 MPa, and the flexural strength of 65 MPa to 88 MPa.

According to another embodiment of the present disclosure, a molded article containing the polymer composite is provided.

The molded article may exhibit excellent mechanical properties while being environmentally friendly by containing the polymer composite.

The molded article may be manufactured by a conventional processing method using the polymer composite as a raw material. For example, the molded article may be obtained by injection molding, extrusion molding, calendar molding, and the like using a raw material composition including the polymer composite.

For example, a molded article containing the polymer composite may be manufactured by injection molding. The polymer composite melted through a plasticizing step and a flowing step is filled into a cavity of the mold by a plunger, and then a cooling step is performed for solidification. The mold may be provided with a pressure sensor, a temperature sensor, a hot runner system, and the like. There may be a separate cooling line for solidifying the molten material. The plunger retracts, and then a solidified molded article can be separated from the mold using an ejector pin.

Preferably, the molded article may be a lightweight material for automobiles such as an interior or exterior material for automobiles. For example, the molded article may be an interior or exterior material for automobiles selected from the group consisting of dashboard, door trim, battery tray, bumper, luggage trim, door opening trim, headliner, rear shelf, tonneau cover, sun visor, assist grip, console box, fender panel, oil pan, wheel house, side skirt, garnish, electric parts, engine cover, seat belt cover, switch button, and center facia.

In addition, the molded article may be applied to various fields such as an interior or exterior material for home appliances, packaging materials, and the like.

*[ADVANTAGEOUS EFFECTS]*

The polymer composite according to the present disclosure may exhibit excellent mechanical properties and high lightness while being environmentally friendly by containing cellulose fibers as a reinforcing material.

## [BRIEF DESCRIPTION OF THE DRAWINGS]

FIG. 1 is an enlarged schematic view of (a) non-fibrillated microcellulose fibers and (b) microcellulose fibers including nanofibrils and second inorganic particles.

FIG. 2 and FIG. 3 are scanning electron microscope (SEM) images of cellulose fibers fibrillated by the growth of the second inorganic particles according to Preparation Example 2.

FIG. 4 shows a comparison of SEM images of (a) fibrillated microcellulose fibers according to Preparation Example 3 and (b) miniaturized cellulose fibers complexed with particles according to Preparation Example 4.

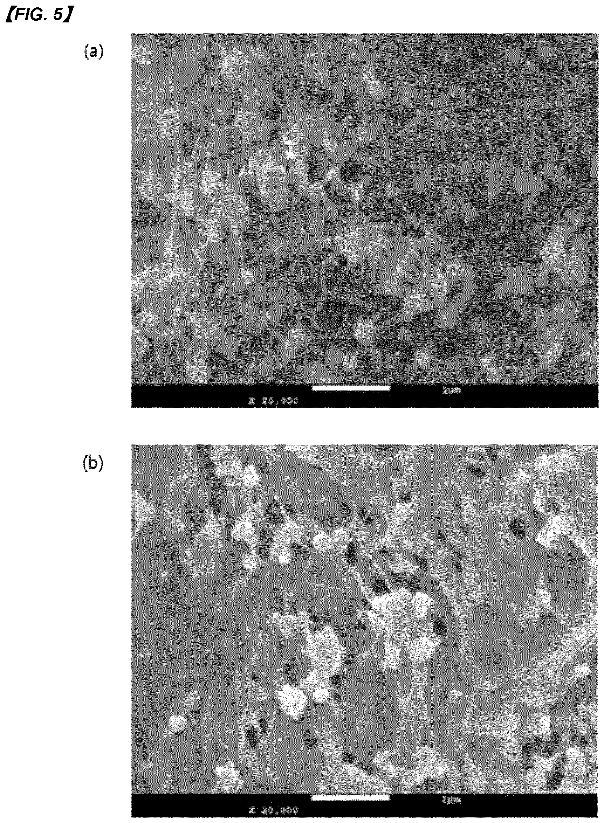

FIG. 5 shows SEM images of FIG. 4 (a) and (b) taken at a higher magnification.

FIG. 6 shows specifications of a dog-bone-shaped specimen (or a dumbbell-shaped specimen) for measuring tensile strength according to Type V of ASTM D638 (unit: mm).

[DESCRIPTION OF SYMBOLS]

100, 100': Microcellulose fibers
11: Nanofibrils
20: Second inorganic particles

## [DETAILED DESCRIPTION OF THE EMBODIMENTS]

Hereinafter, the function and effect of the present invention will be described in more detail through specific examples. However, these examples are for illustrative purposes only, and the invention is not intended to be limited by these examples.

Preparation Example 1

(Preparation of first microcellulose fibers)

Hardwood kraft pulps (cellulose fibers) were prepared as cellulose raw materials. 20 g of the pulps were added to 1000 g of distilled water, ground three times in a wet state in a mixer, and filtered under reduced pressure to prepare first microcellulose fibers (diameter: 15 $\mu$m to 30 $\mu$m and length: 0.2 mm to 2 mm).

Preparation Example 2

(Preparation of second microcellulose fibers including nanofibrils and second inorganic particles)

Hardwood kraft pulps (cellulose fibers) were prepared as cellulose raw materials. An aqueous solution in which 20 g of zinc acetate was dissolved in 1000 g of distilled water was prepared. 20 g of the pulps were added to the aqueous solution and stirred at 500 rpm for 2 hours to obtain a mixture.

7.2 g of sodium hydroxide (NaOH) was added to the mixture as a reducing agent at room temperature, and stirred at 500 rpm for 2 hours to grow second inorganic particles (ZnO) on the pulps. The content of the second inorganic particles was confirmed to be 27 parts by weight based on 100 parts by weight of the pulps.

It was confirmed using a scanning electron microscope (SEM) that fibrillation occurred in the pulp portion on which second inorganic particles (ZnO) were grown as shown in FIG. 2 (a). As a result of analyzing the SEM image, it was confirmed that the second inorganic particles had a particle diameter of about 0.1 $\mu$m to 1 ,um.

By the above method, microcellulose fibers including nanofibrils and second inorganic particles were obtained.

Preparation Example 3

(Preparation of second microcellulose fibers including nanofibrils and second inorganic particles)

Softwood kraft pulps (cellulose fibers) were prepared as cellulose raw materials. An aqueous solution in which 20 g of zinc acetate was dissolved in 1000 g of distilled water was prepared. 20 g of the pulps were added to the aqueous solution and stirred at 500 rpm for 2 hours to obtain a mixture. In the mixture, zinc acetate is attached to the swollen pulp fibers by hydrogen bonding or ionic bonding.

3.6 g of sodium hydroxide (NaOH) was added to the mixture at room temperature, and stirred at 500 rpm for 2 hours to grow second inorganic particles (ZnO) on the pulps. The content of the second inorganic particles was confirmed to be 15 parts by weight based on 100 parts by weight of the pulps.

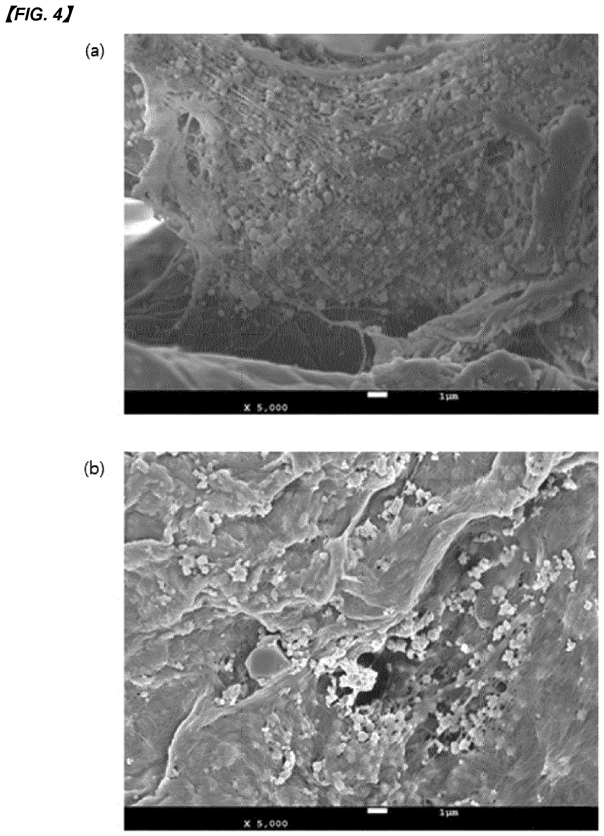

It was confirmed using a scanning electron microscope that fibrillation occurred in the pulp portion on which particles (ZnO) were grown as shown in FIG. 4-(a) and FIG. 5-(a).

By the above method, microcellulose fibers including nanofibrils and second inorganic particles were obtained.

Preparation Example 4

(Preparation of miniaturized cellulose fibers)

Softwood kraft fibers were prepared as cellulose raw materials as in Example 1. A surface of the pulp fibers was oxidized using 2,2,6,6-tetramethylpiperidinyl-1-oxyradical (TEMPO) as a catalyst to obtain oxidized pulp.

1 g of the oxidized pulp was dispersed in 99 g of distilled water and miniaturized (defibrated) with a mixer for 30 minutes to obtain an aqueous dispersion of miniaturized cellulose at a concentration of 1%.

A zinc acetate aqueous solution was prepared by dissolving 20 g of zinc acetate in 1000 g of distilled water. 3.6 g of sodium hydroxide (NaOH) was dissolved in 10 ml of distilled water to prepare a sodium hydroxide solution.

While stirring 100 g of the aqueous dispersion of miniaturized cellulose at 15 °C, 50 ml of the zinc acetate aqueous solution and 10 ml of the sodium hydroxide solution were added thereto, followed by stirring at 500 rpm for 2 hours to prepare a composite of zinc oxide (ZnO) particles and miniaturized cellulose.

As shown in FIG. 4-(b) and FIG. 5-(b), it was confirmed using a scanning electron microscope that the composite of zinc oxide particles and miniaturized cellulose according to Preparation Example 4 had strong bonding strength and aggregation between the miniaturized celluloses, so that nanofibers were aggregated and the dispersion degree of particles was low.

Example 1

20 wt% of first microcellulose fibers according to Preparation Example 1, 10 wt% of second microcellulose fibers including nanofibrils and second inorganic particles according to Preparation Example 2, 55 wt% of polypropylene, 5 wt% of first inorganic particles (titanium oxide, average particle diameter: 350nm), and 10 wt% of a compatibilizer were added to a batch mixer, and mixed at 180 °C for 20 minutes to prepare a master batch in the form of pellets. As the compatibilizer, maleic anhydride-grafted polypropylene was used.

The master batch was put into a twin-screw extruder to perform a compounding process, and then extruded. The mixture obtained through the extrusion was put back into an injection machine and then injected, thereby obtaining a polymer composite specimen and a molded article (luggage trim for automobiles).

Example 2

A polymer composite specimen and a molded article were obtained in the same manner as in Example 1, except that 15 wt% of first microcellulose fibers according to Preparation Example 1, 15 wt% of second microcellulose fibers including nanofibrils and second inorganic particles according to Preparation Example 2, 55 wt% of polypropylene, 5 wt% of first inorganic particles (titanium oxide, average particle diameter: 350nm), and 10 wt% of a compatibilizer were added to a batch mixer.

Example 3

A polymer composite specimen and a molded article were obtained in the same manner as in Example 1, except that second microcellulose fibers including nanofibrils and second inorganic particles according to Preparation Example 3 were used instead of the second microcellulose fibers including nanofibrils and second inorganic particles according to Preparation Example 2.

Example 4

25 wt% of first microcellulose fibers according to Preparation Example 1, 5 wt% of second microcellulose fibers including nanofibrils and second inorganic particles according to Preparation Example 2, 55 wt% of polypropylene, 5 wt% of first inorganic particles (titanium oxide, average particle diameter: 350nm), and 10 wt% of a compatibilizer were added to a batch mixer, and mixed at 180 °C for 20 minutes to prepare a master batch in the form of pellets. As the compatibilizer, maleic anhydride-grafted polypropylene was used.

The master batch was put into a twin-screw extruder to perform a compounding process, and then extruded. The mixture obtained through the extrusion was put back into an injection machine and then injected, thereby obtaining a polymer composite specimen and a molded article (luggage trim for automobiles).

Example 5

A polymer composite specimen and a molded article were obtained in the same manner as in Example 1, except that 20 wt% of first microcellulose fibers according to Preparation Example 1, 10 wt% of second microcellulose fibers including nanofibrils and second inorganic particles according to Preparation Example 2, 57.5 wt% of polypropylene, 2.5 wt% of first inorganic particles (titanium oxide, average particle diameter: 350nm), and 10 wt% of a compatibilizer were added to a batch mixer.

Example 6

A polymer composite specimen and a molded article were obtained in the same manner as in Example 1, except that 20 wt% of first microcellulose fibers according to Preparation Example 1, 10 wt% of second microcellulose fibers including nanofibrils and second inorganic particles according to Preparation Example 2, 52.5 wt% of polypropylene, 7.5 wt% of first inorganic particles (titanium oxide, average particle diameter: 350nm), and 10 wt% of a compatibilizer were added to a batch mixer.

Example 7

A polymer composite specimen and a molded article were obtained in the same manner as in Example 1, except that 20 wt% of first microcellulose fibers according to Preparation Example 1, 10 wt% of second microcellulose fibers including nanofibrils and second inorganic particles according to Preparation Example 2, 50 wt% of polypropylene, 10 wt% of first inorganic particles (titanium oxide, average particle diameter: 350nm), and 10 wt% of a compatibilizer were added to a batch mixer.

Example 8

A polymer composite specimen and a molded article were obtained in the same manner as in Example 1, except that 30 wt% of first microcellulose fibers according to Preparation Example 1, 15 wt% of second microcellulose fibers including nanofibrils and second inorganic particles according to Preparation Example 2, 40 wt% of polypropylene, 5 wt% of first inorganic particles (titanium oxide, average particle diameter: 350nm), and 10 wt% of a compatibilizer were added to a batch mixer.

Example 9

A polymer composite specimen and a molded article were obtained in the same manner as in Example 1, except that 15 wt% of first microcellulose fibers according to Preparation Example 1, 10 wt% of second microcellulose fibers including nanofibrils and second inorganic particles according to Preparation Example 2, 60 wt% of polypropylene, 5 wt% of first inorganic particles (titanium oxide, average particle diameter: 350nm), and 10 wt% of a compatibilizer were added to a batch mixer.

Example 10

A polymer composite specimen and a molded article were obtained in the same manner as in Example 1, except that 10 wt% of first microcellulose fibers according to Preparation Example 1, 5 wt% of second microcellulose fibers including nanofibrils and second inorganic particles according to Preparation Example 2, 70 wt% of polypropylene, 5 wt% of first inorganic particles (titanium oxide, average particle diameter: 350nm), and 10 wt% of a compatibilizer were added to a batch mixer.

Example 11

A polymer composite specimen and a molded article were obtained in the same manner as in Example 1, except that 10 wt% of second microcellulose fibers including nanofibrils and second inorganic particles according to Preparation Example 2, 80 wt% of polypropylene, 5 wt% of first inorganic particles (titanium oxide, average particle diameter: 350nm), and 5 wt% of a compatibilizer were added to a batch mixer.

Example 12

A polymer composite specimen and a molded article were obtained in the same manner as in Example 1, except that 30 wt% of second microcellulose fibers including nanofibrils and second inorganic particles according to Preparation Example 2, 55 wt% of polypropylene, 5 wt% of first inorganic particles (titanium oxide, average particle diameter: 350nm), and 10 wt% of a compatibilizer were added to a batch mixer.

Comparative Example 1

A polymer composite specimen and a molded article were obtained in the same manner as in Example 1, except that 20 wt% of first microcellulose fibers according to Preparation Example 1, 10 wt% of second microcellulose fibers including nanofibrils and second inorganic particles according to Preparation Example 2, 60 wt% of polypropylene, and 10 wt% of a compatibilizer were added to a batch mixer.

Comparative Example 2

A polymer composite specimen and a molded article were obtained in the same manner as in Example 1, except that 30 wt% of hardwood kraft pulps (cellulose fibers) used in Preparation Example 1 which were soaked in water and swollen, 60 wt% of polypropylene, and 10 wt% of a compatibilizer were added to a batch mixer.

Comparative Example 3

A polymer composite specimen and a molded article were obtained in the same manner as in Example 1, except that 15 wt% of first microcellulose fibers according to Preparation Example 1, 15 wt% of second microcellulose fibers including nanofibrils and second inorganic particles according to Preparation Example 2, 60 wt% of polypropylene, and 10 wt% of a compatibilizer were added to a batch mixer.

Comparative Example 4

A polymer composite specimen and a molded article were obtained in the same manner as in Example 1, except that 30 wt% of the miniaturized cellulose fibers according to Preparation Example 4, 60 wt% of polypropylene, and 10 wt% of a compatibilizer were added to a batch mixer.

Test Examples

(1) Diameter of fiber

The diameter of the cellulose fibers prepared in Preparation Examples was measured using a scanning electron microscope.
Specifically, in the case of microcellulose fibers, the diameters of 10 microfibers per each sample were measured and displayed in a range excluding the maximum and minimum values. In the case of nanofibrils, the diameters of 20 nanofibrils per each sample were measured, and displayed in a range excluding the maximum and minimum values.
In Preparation Example 4, pulp fibers were miniaturized (defibrated), and then complexed with particles unlike Examples. The diameter of nanofibrils of Preparation Example 4 in Table 1 below means the diameter of the miniaturized cellulose after complexing with particles.

(2) Tensile test

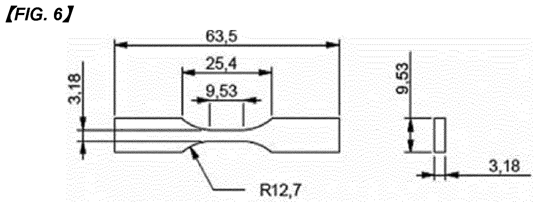

The following specimen (FIG. 6) was prepared according to the standard of specimen Type V of ASTM D638. The specimen was left for 24 hours in a constant temperature and humidity room adjusted to a temperature of 23 °C and a relative humidity of 50%, and then subjected to a tensile test.
The tensile strength (MPa), tensile modulus (GPa) and elongation at break (%) of the specimen were measured according to ASTM D638 using a universal testing machine (UTM) manufactured by Instron. In accordance with ASTM D638, a gap between the grips holding the specimen at both ends was set to 25.4 mm, and the test was performed at a constant tensile rate with a crosshead speed of 5 mm/min.

(3) Flexure test

A specimen having a size of 80 mm x 10 mm x 4 mm was prepared according to ISO 178. The specimen was left for 24 hours in a constant temperature and humidity room adjusted to a temperature of 23 °C and a relative humidity of 50%, and then subjected to a flexural test.
The flexural strength (MPa), flexural modulus (GPa) and flexural strain at break (%) of the specimen were measured according to ISO 178 using a universal testing machine (UTM) manufactured by Instron. In accordance with ISO 178, a supports span was set to 46 mm using a three-point flexural test jig, and a flexural test was performed under a crosshead speed of 5 mm/min.

(4) Impact strength

A specimen having a size of 63.5 mm x 12.7 mm x 3.2 mm with an ASTM D256 standard notch was prepared. Then, Izod impact strength was measured according to ASTM D256 (23 °C, hammer head: 3.00 J) for the above specimen using a digital impact tester (QM(700A), manufactured by QMESYS).

(5) Color measurement

The color of the specimen was measured according to the L*a*b* (CIE LAB) colorimetric system using a spectrophotometer (model name: Ci7860, manufacturer: X-rite). The specimen having a size of 63.5 mm x 12.7 mm x 3.2 mm was prepared according to ASTM D256. The color was measured three times in a reflection mode, and then an average value thereof was recorded.

[Table 1]

|  | Diameter | | Size of second inorganic particles ($\mu$m) |
|---|---|---|---|
|  | Microcellulose fibers ($\mu$m) | Nanofibrils (nm) |  |
| Prep. Ex. 1 | 15~30 | - | - |
| Prep. Ex. 2 | 1~10 | 50~100 | 0.1~1 |
| Prep. Ex. 3 | 1~10 | 50~100 | 1~2 |
| Prep. Ex. 4 | - | 10~100 | 0.1~1 |

[Table 2]

|  | Ex. 1 | Ex. 2 | Ex. 3 | Ex. 4 | Ex. 5 | Ex. 6 |
|---|---|---|---|---|---|---|
| Impact strength (J/m) | 29 | 28 | 27 | 28 | 27 | 30 |
| Tensile strength (MPa) | 51.4 | 50.2 | 50.7 | 51.1 | 51.2 | 50.4 |
| Tensile modulus (GPa) | 2.79 | 2.63 | 2.65 | 2.69 | 2.77 | 2.67 |
| Elongation at break (%) | 5.25 | 5.23 | 5.13 | 5.11 | 5.31 | 4.98 |
| Flexural strength (MPa) | 71.1 | 65.7 | 67.3 | 68.3 | 70.7 | 70.9 |
| Flexural modulus (GPa) | 2.8 | 2.9 | 2.5 | 2.8 | 2.8 | 2.8 |
| Flexural strain at break (%) | 6.8 | 5.9 | 6.4 | 6.8 | 6.9 | 6.2 |
| L* | 92.5 | 94.3 | 91.2 | 90.3 | 90.1 | 95.8 |

[Table 3]

|  | Ex. 7 | Ex. 8 | Ex. 9 | Ex. 10 | Ex. 11 | Ex. 12 |
|---|---|---|---|---|---|---|
| Impact strength (J/m) | 31 | 27 | 35 | 42 | 55 | 28 |

(continued)

|  | Ex. 7 | Ex. 8 | Ex. 9 | Ex. 10 | Ex. 11 | Ex. 12 |
|---|---|---|---|---|---|---|
| Tensile strength (MPa) | 50.0 | 62.8 | 45.7 | 38.8 | 30.1 | 50.9 |
| Tensile modulus (GPa) | 2.59 | 3.46 | 2.45 | 2.08 | 1.71 | 2.75 |
| Elongation at break (%) | 4.27 | 3.55 | 6.78 | 16.4 | 45.7 | 5.04 |
| Flexural strength (MPa) | 67.8 | 88.4 | 62.4 | 58.4 | 52.8 | 68.1 |
| Flexural modulus (GPa) | 2.6 | 3.4 | 2.4 | 2.1 | 1.9 | 2.9 |
| Flexural strain at break (%) | 5.7 | 3.9 | 9.1 | >10 | >10 | 5.6 |
| L* | 96.9 | 90.2 | 95.8 | 96.1 | 96.7 | 95.6 |

[Table 4]

|  | Comp. Ex. 1 | Comp. Ex.2 | Comp. Ex.3 | Comp. Ex.4 |
|---|---|---|---|---|
| Impact strength (J/m) | 25 | 25 | 26 | 23 |
| Tensile strength (MPa) | 50.4 | 47.9 | 50.1 | 39.0 |
| Tensile modulus (GPa) | 2.59 | 2.86 | 2.62 | 2.80 |
| Elongation at break (%) | 5.35 | 4.53 | 5.19 | 4.30 |
| Flexural strength (MPa) | 71.1 | 65.8 | 66.8 | 53.4 |
| Flexural modulus (GPa) | 2.7 | 2.5 | 2.8 | 2.6 |
| Flexural strain at break (%) | 6.9 | 7.5 | 6.1 | 6.3 |
| L* | 69.8 | 59.1 | 74.8 | 58.9 |

Referring to Tables 2 to 4, it was confirmed that the polymer composites according to Examples had high lightness while having similar or improved mechanical properties compared to the polymer composites according to Comparative Examples.

In the cellulose fibers prepared in Preparation Example 4, particles are grown on the miniaturized cellulose. Nevertheless, when complexing with the polymer matrix in Comparative Example 4, re-aggregation of the miniaturized cellulose and the particles occurred excessively. The specimen of Comparative Example 4, which showed poor dispersibility due to the re-aggregation, generally exhibited poor physical properties.

**Claims**

1. A polymer composite containing

   a polymer matrix,
   a reinforcing material comprising cellulosic fibers, and
   first inorganic particles; and
   satisfying the following Equation 1:

   [Equation 1]

   $$L^* \geq 75.0$$

   in Equation 1, the L* value is the lightness in the L*a*b* (CIE LAB) colorimetric system measured using a spectrophotometer for a specimen prepared from the polymer composite.

2. The polymer composite of Claim 1,

wherein the cellulose fibers are microcellulose fibers comprising nanofibrils and second inorganic particles.

3. The polymer composite of Claim 2,
wherein the nanofibrils are bonded to a surface of the microcellulose fibers; and the second inorganic particles are bonded to the nanofibrils or bonded to a surface or inside of the microcellulose fibers.

4. The polymer composite of Claim 2,
wherein the second inorganic particles comprise one or more metal particles selected from the group consisting of copper, zinc, calcium, aluminum, iron, silver, platinum, palladium, ruthenium, iridium, rhodium, osmium, chromium, cobalt, nickel, manganese, vanadium, molybdenum, magnesium, strontium, titanium, zirconium, hafnium, and gallium, or silicon oxide particles.

5. The polymer composite of Claim 2,
wherein the second inorganic particles are contained in an amount of 10 to 40 parts by weight based on 100 parts by weight of the microcellulose fibers.

6. The polymer composite of Claim 2,
wherein the second inorganic particles comprise spherical particles having a diameter of 0.01 $\mu$m to 10 $\mu$m; columnar particles having a diameter of 0.01 $\mu$m to 10 $\mu$m on one axis and a diameter of 0.02 $\mu$m to 30 $\mu$m on another axis; or a mixture thereof.

7. The polymer composite of Claim 2,
wherein the microcellulose fibers have a diameter of 1 $\mu$m to 30 $\mu$m; and the nanofibrils have a diameter of 10 nm to 400 nm.

8. The polymer composite of Claim 1,
wherein the cellulose fibers are a mixture of first microcellulose fibers; and second microcellulose fibers containing nanofibrils and second inorganic particles.

9. The polymer composite of Claim 8,
wherein the first microcellulose fibers have a diameter of 10 $\mu$m to 40 $\mu$m and a length of 0.1 mm to 3 mm.

10. The polymer composite of Claim 8,
wherein the cellulose fibers comprise the first microcellulose fibers and the second microcellulose fibers comprising nanofibrils and second inorganic particles in a weight ratio of 1:0.1 to 1:3.

11. The polymer composite of Claim 8,
wherein the first inorganic particles and the second inorganic particles are contained in a total amount of 1 to 30 parts by weight based on 100 parts by weight of the polymer composite.

12. The polymer composite of Claim 1,
wherein the first inorganic particles comprise one or more inorganic particles selected from the group consisting of titanium oxide, zinc oxide, boron nitride, and barium sulfate.

13. The polymer composite of Claim 1,
wherein the first inorganic particles are inorganic particles having an average particle diameter of 50 nm to 1000 nm.

14. The polymer composite of Claim 1,
wherein the polymer composite has the L* value of 90.0 to 98.0.

15. The polymer composite of Claim 1,
wherein the polymer matrix comprises at least one polymer resin selected from the group consisting of polyethylene, polyethylene-based copolymer, polypropylene, polypropylene-based copolymer, nylon-6, nylon-66, aramid, polystyrene, acrylonitrile-butadiene-styrene copolymer, styrene-maleic anhydride copolymer, styrene-acrylonitrile copolymer, styrene-butadiene-styrene copolymer, and polycarbonate.

16. The polymer composite of Claim 1,
wherein the polymer composite contains 30 to 90 wt% of the polymer matrix; 5 to 60 wt% of the reinforcing material comprising cellulose fibers; and 0.1 to 15 wt% of the first inorganic particles.

17. The polymer composite of Claim 1,

wherein Izod impact strength measured according to ASTM D256 for a specimen having a size of 63.5 mm x 12.7 mm x 3.2 mm with an ASTM D256 standard notch prepared from the polymer composite is 15 J/m or more; tensile strength measured according to ASTM D638-5 for an ASTM D638-5 standard specimen prepared from the polymer composite is 25 MPa or more; and

flexural strength measured according to ISO 178 for a specimen having a size of 80 mm x 10 mm x 4 mm prepared from the polymer composite is 50 MPa or more.

18. The polymer composite of Claim 1,

wherein the L* is 90.0 to 98.0;

Izod impact strength measured according to ASTM D256 (23°C, hammer head 3.00 J) for a specimen having a size of 63.5 mm x 12.7 mm x 3.2 mm with an ASTM D256 standard notch prepared from the polymer composite is 19 J/m to 55 J/m;

tensile strength measured according to ASTM D638-5 for an ASTM D638-5 standard specimen prepared from the polymer composite is 30 MPa to 63 MPa; and

flexural strength measured according to ISO 178 for a specimen having a size of 80 mm x 10 mm x 4 mm prepared from the polymer composite is 52 MPa to 88 MPa.

19. A molded article containing the polymer composite of Claim 1.

20. The molded article of Claim 20,
wherein the molded article is an interior or exterior material for automobiles.

21. The molded article of Claim 20,
wherein the molded article is an interior or exterior material for automobiles selected from the group consisting of dashboard, door trim, battery tray, bumper, luggage trim, door opening trim, headliner, rear shelf, tonneau cover, sun visor, assist grip, console box, fender panel, oil pan, wheel house, side skirt, garnish, electric parts, engine cover, seat belt cover, switch button, and center facia.

【FIG. 1】

(a)

100

(b)

11    20    100'

11

【FIG. 2】

(a)

(b)

【FIG. 3】

(a)

(b)

【FIG. 4】

(a)

(b)

【FIG. 5】

(a)

(b)

【FIG. 6】

| | | |
|---|---|---|
| **INTERNATIONAL SEARCH REPORT** | International application No. | |
| | **PCT/KR2022/010241** | |

**A.    CLASSIFICATION OF SUBJECT MATTER**

**C08J 5/04**(2006.01)i; **C08J 5/06**(2006.01)i; **C08L 101/00**(2006.01)i; **C08L 21/00**(2006.01)i; **C08L 23/08**(2006.01)i; **C08L 23/16**(2006.01)i; **C08L 9/02**(2006.01)i; **C08L 9/06**(2006.01)i; **C08L 1/02**(2006.01)i; **C08K 3/013**(2018.01)i

According to International Patent Classification (IPC) or to both national classification and IPC

**B.    FIELDS SEARCHED**

Minimum documentation searched (classification system followed by classification symbols)

C08J 5/04(2006.01); C08J 3/28(2006.01); C08J 5/00(2006.01); C08L 1/00(2006.01); C08L 101/00(2006.01); C08L 23/00(2006.01); C08L 23/26(2006.01); C09D 5/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자복합체(polymer composite), 셀룰로오스 섬유(cellulose fiber), 나노피브릴 (nanofibril), 무기입자(inorganic particle), 명도(brightness)

**C.    DOCUMENTS CONSIDERED TO BE RELEVANT**

| Category* | Citation of document, with indication, where appropriate, of the relevant passages | Relevant to claim No. |
|---|---|---|
| Y | JP 2020-070379 A (DAIO PAPER CORP.) 07 May 2020 (2020-05-07)<br>    See abstract; claim 1; paragraphs [0042]-[0129]; and table 1. | 1-21 |
| Y | KR 10-1823660 B1 (LG CHEM, LTD.) 30 January 2018 (2018-01-30)<br>    See claim 1; and paragraphs [0032] and [0075]. | 1-21 |
| Y | SAHOO, K. et al. ZnO-cellulose Nanocomposite Powder For Application In UV Sensors. AIP Conference Proceedings. 2017, vol. 1832, document no. 050090, pp. 1-3.<br>    See pages 1-2. | 1-21 |
| A | JP 2020-193262 A (FURUKAWA ELECTRIC CO., LTD.) 03 December 2020 (2020-12-03)<br>    See entire document. | 1-21 |
| A | JP 2020-033541 A (PANASONIC CORP.) 05 March 2020 (2020-03-05)<br>    See entire document. | 1-21 |

☐ Further documents are listed in the continuation of Box C.        ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 November 2022** | **01 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/010241**

| Patent document cited in search report | | | Publication date (day/month/year) | Patent family member(s) | | | Publication date (day/month/year) |
|---|---|---|---|---|---|---|---|
| JP | 2020-070379 | A | 07 May 2020 | CA | 3113107 | A1 | 07 May 2020 |
| | | | | CN | 112673060 | A | 16 April 2021 |
| | | | | JP | 2020-070378 | A | 07 May 2020 |
| | | | | KR | 10-2021-0084430 | A | 07 July 2021 |
| | | | | US | 2022-0049071 | A1 | 17 February 2022 |
| | | | | WO | 2020-090711 | A1 | 07 May 2020 |
| KR | 10-1823660 | B1 | 30 January 2018 | CN | 105453190 | A | 30 March 2016 |
| | | | | CN | 105453190 | B | 02 January 2018 |
| | | | | CN | 105474330 | A | 06 April 2016 |
| | | | | CN | 105474330 | B | 05 December 2017 |
| | | | | CN | 105474331 | A | 06 April 2016 |
| | | | | CN | 105474331 | B | 05 December 2017 |
| | | | | EP | 3007182 | A1 | 13 April 2016 |
| | | | | EP | 3007182 | B1 | 24 June 2020 |
| | | | | EP | 3007183 | A1 | 13 April 2016 |
| | | | | EP | 3007183 | B1 | 26 February 2020 |
| | | | | EP | 3032548 | A1 | 15 June 2016 |
| | | | | JP | 2016-529713 | A | 23 September 2016 |
| | | | | JP | 2016-529714 | A | 23 September 2016 |
| | | | | JP | 2016-533032 | A | 20 October 2016 |
| | | | | JP | 6162898 | B2 | 12 July 2017 |
| | | | | JP | 6316961 | B2 | 25 April 2018 |
| | | | | JP | 6316962 | B2 | 25 April 2018 |
| | | | | KR | 10-1831885 | B1 | 23 February 2018 |
| | | | | KR | 10-2015-0018368 | A | 23 February 2015 |
| | | | | KR | 10-2015-0018382 | A | 23 February 2015 |
| | | | | KR | 10-2016-0130371 | A | 11 November 2016 |
| | | | | TW | 201524291 | A | 16 June 2015 |
| | | | | TW | 201525033 | A | 01 July 2015 |
| | | | | TW | 201527369 | A | 16 July 2015 |
| | | | | TW | I530515 | B | 21 April 2016 |
| | | | | TW | I563889 | B | 21 December 2016 |
| | | | | TW | I565740 | B | 11 January 2017 |
| | | | | US | 10344385 | B2 | 09 July 2019 |
| | | | | US | 2016-0194759 | A1 | 07 July 2016 |
| | | | | US | 2016-0201198 | A1 | 14 July 2016 |
| | | | | US | 2016-0212860 | A1 | 21 July 2016 |
| | | | | WO | 2015-020332 | A1 | 12 February 2015 |
| | | | | WO | 2015-020455 | A1 | 12 February 2015 |
| | | | | WO | 2015-020456 | A1 | 12 February 2015 |
| JP | 2020-193262 | A | 03 December 2020 | JP | 6738938 | B1 | 12 August 2020 |
| JP | 2020-033541 | A | 05 March 2020 | CN | 110857351 | A | 03 March 2020 |
| | | | | EP | 3613805 | A1 | 26 February 2020 |
| | | | | EP | 3613805 | B1 | 22 June 2022 |
| | | | | US | 2020-0062930 | A1 | 27 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210107618
- KR 1020220077703